# EUROPEAN PATENT SPECIFICATION

(11) **EP 3 808 465 B1**
(45) Date of publication and mention of the grant of the patent: **12.03.2025**
(21) Application number: 20198731.0
(22) Date of filing: 28.09.2020
(51) Int. Cl.: B09B 3/00, B09B 5/00, B65B 69/00, B65D 85/804

(54) **METHOD AND UNIT FOR RECOVERING CAPSULES CONTAINING EXHAUSTED POWDERED FOOD PRODUCTS**
VERFAHREN UND EINHEIT ZUR RÜCKGEWINNUNG VON KAPSELN MIT VERBRAUCHTEN PULVERFÖRMIGEN NAHRUNGSMITTELN
PROCÉDÉ ET UNITÉ DE RÉCUPÉRATION DE CAPSULES CONTENANT DES PRODUITS ALIMENTAIRES EN POUDRE ÉPUISÉS

(30) Priority: 18.10.2019 IT 201900019313
(43) Date of publication of application: 21.04.2021
(73) Proprietor: A.D. Distribuzione S.r.l., 52048 Monte San Savino Arezzo (IT)
(72) Inventor: SESTINI, Edoardo, 52048 Monte San Savino (IT); ROSSI, Edoardo, 52048 Monte San Savino (IT); MARI, Nicolo' Maria, 52048 Monte San Savino (IT); MANGIARANO, Fabio, 52048 Monte San Savino (IT); ROSSINI, Luca, 52048 Monte San Savino (IT); OLIVIERI, Nicola, 52048 Monte San Savino (IT)
(74) Representative: Bellomia, Paolo

(56) References cited:
- WO-A1-2011/051867
- WO-A1-2019/186491

## Description

The present invention relates to a method and a unit for recovering capsules containing exhausted powdered food products.

The invention is suitable for both industrial and household applications.

The term "capsule" is intended herein to refer to any type of container suitable for containing a portion, typically single-dose, of an infusion food product, preferably powdered (e.g., coffee, tea, herbal teas, and the like) for the preparation of typically hot beverages.

The capsule generally comprises a cup container closed by a lid (e.g., a protective film).

The lid is suitable for being perforated by a special device to allow the influx of pressurized water within the capsule for the preparation of the beverage which typically outflows from the bottom of the capsule through a pre-existing valve or through the creation of a special perforation. Nowadays the use of capsules containing powdered food products is widespread, thanks to the ease of use of the preparation system.

In fact, a capsule is simply inserted within a special machine to obtain a hot beverage in a few seconds.

However, one of the most suffered problems in the use of this type of product is related to the disposal of the "exhausted" capsules (i.e., containing exhausted powdered food products) which cannot be recycled or composted.

Capsule manufacturers often make the container and/or lid of the capsules in non-recyclable plastic or aluminium, making the exhausted capsule not directly recyclable by the consumer, who must provide for special separate waste collection to be delivered to special recycling points.

Exhausted capsule recovery systems are known, which include the use of bulky machinery which grinds the capsules and then separates the components in order to reuse them.

Known methods and devices of method for recovering capsules containing exhausted food products are disclosed in WO2019/186491A1 and WO2011/051867.

However, the Applicant has noted that these recovery methods are not free of problems related to the contamination of exhausted food products with plastic or aluminium microparticles remaining from the shredding of the lids.

Recovered exhausted food products are typically reused as fertilisers for cultivation, and the risk of soil contamination with such microparticles is very high.

The Applicant has also observed that the practice of recovery by means of special waste collection by the consumer can discourage the consumer from purchasing non-recyclable capsules.

In this context, the technical task underlying the present invention is to propose a method and unit for recovering capsules containing exhausted powdered food products which overcome one or more drawbacks of the prior art mentioned above.

In particular, an object of the present invention is to provide a method for recovering capsules containing exhausted powdered food products which is practical and efficient.

A further object of the present invention is to propose a unit for recovering capsules containing exhausted powdered food products which is of reduced dimensions and which allows to effectively separate the exhausted food products from the capsule containment bodies.

The mentioned technical task and the specified aims are substantially achieved by a method and unit for recovering capsules containing exhausted powdered food products, comprising the technical specifications set out in one or more of the appended claims.

In particular, the present invention provides a method for recovering capsules containing exhausted powdered food products, comprising the steps of:
- providing at least one capsule having a containment body defining a containment chamber of exhausted powdered food products axially delimited by a front wall and a rear wall;
- arranging said capsule within a housing having at least a first axial opening facing said front wall;
- generating an air flow passing through said at least one first axial opening of the housing and through said front wall of the capsule so as to withdraw the exhausted powdered food products contained within the capsule,
- collecting the withdrawn exhausted powdered food products, and
- removing the emptied capsule from the housing.

Advantageously, the generation of the air flow passing through the first axial opening of the housing and the front wall allows to remove the exhausted powdered food products without having to destroy the capsule containment body. In this way both the capsule containment body and the exhausted powdered food products can be separately recovered. Advantageously, the step of generating the air flow is carried out by generating an overpressure or a depressure at the front wall such as to break the front wall, which allows for the effective and efficient removal of the exhausted powders.

According to a further aspect of the present invention there is further provided a unit for recovering capsules containing exhausted powdered food products comprising at least one housing shaped to receive a capsule containing exhausted powdered food products.

The capsule has a containment body defining a containment chamber of the exhausted powdered food products axially delimited by a front wall and a rear wall.

The housing has a first axial opening suitable for facing the front wall of the capsule.

The unit advantageously comprises at least one air flow generator configured to generate an air flow passing through at least the first axial opening of the housing, such that, during an operating configuration in which the capsule is arranged within the housing, the air flow passes through the front wall of the capsule so as to withdraw the exhausted powdered food products contained within the capsule itself.

In other words, the air flow generator is capable of generating an air flow which passes through the front wall to allow the withdrawal of the exhausted powdered food products, without destroying the containment body but simply removing them from the containment chamber.

In particular, the air flow generator is configured to generate an overpressure or a depressure at the front wall such as to break the front wall, so as to allow an optimal emptying of the capsule.

Advantageously, the unit further comprises first collection means configured to collect the exhausted powdered food products withdrawn from the capsules so that they are not dispersed once they are removed with the air flow.

Advantageously, the absence of any crushing, cutting or removal device of the front wall of the capsule makes it possible to obtain a unit of limited size which can be made for both a domestic application and an industrial application, as will be clear from the embodiments which follow in the description.

The dependent claims, included here for reference, correspond to different embodiments of the creation and implementation of the invention.

Further features and advantages of the present invention will become more apparent from the description of an exemplary, but not exclusive, and therefore non-limiting, preferred embodiment of a unit for recovering capsules containing exhausted powdered food products, as illustrated in the appended figures, in which:
- figure 1 is a schematic perspective view of a machine comprising a unit for recovering capsules containing exhausted powdered food products according to the present invention;
- figure 2 is a schematic perspective view of the unit of figure 1;
- figure 2A is an enlarged view of a detail II of figure 2;
- figure 3 is a schematic perspective exploded view of a portion of the unit for recovering capsules containing exhausted powdered food products in accordance with a further embodiment of the present invention,
- figure 4 is a schematic section of a capsule containing exhausted powdered food products, and
- figure 5 is a schematic section of the capsule of figure 4 during the flow generating step, according to a possible embodiment of the method for recovering capsules containing exhausted powdered food products according to the present invention.

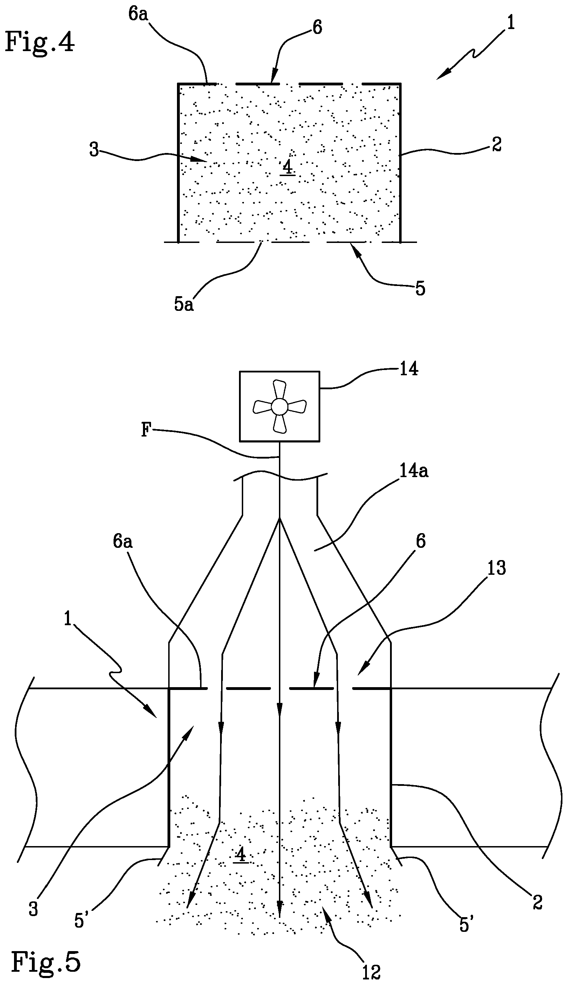

With reference to figure 4, an embodiment of an exhausted capsule 1 is illustrated, i.e., a capsule which has already been used for the preparation of a beverage.

The capsule 1 has a containment body 2 defining a containment chamber 3 of exhausted powdered food products 4 axially delimited by a front wall 5 and a rear wall 6.

Preferably, the containment body 2 is cup-shaped and has a substantially cylindrical shape.

Preferably, the containment body 3 has one or more front holes 5a obtained on the front wall 5, from which the beverage has previously flowed out during preparation, and one or more rear holes 6, from which water has been introduced into the containment chamber 3 to mix with the food products and obtain the beverage.

According to the present invention, the method for recovering capsules 1 containing exhausted powdered food products 4 comprises the steps of:
- providing at least one capsule 1 of the type previously described,
- arranging said capsule 1 within a housing 11 having at least a first axial opening 12 facing the front wall 5 of the capsule 1,
- generating an air flow F passing through at least the first axial opening 12 of the housing 11 and through the front wall 5 of the capsule 1 so as to withdraw the exhausted powdered food products 4 contained within the containment chamber 3 of the capsule 1,

- collecting the withdrawn exhausted powdered food products 4,
- removing the emptied capsule 1 from the housing 11.

Note that the present invention allows the air flow F to be both sucked and blown, since passing at least through the first axial opening 12 and through the front wall 5, the exhausted powdered food products 4 are in any case removed from the containment chamber 3 with an air flow F flowing outwards from the containment chamber 3 through the front wall 5. Furthermore, with reference to figure 5, preferably the generating step is carried out by generating a blown air flow F, indicated with the arrow F, directed towards the front wall 5 of the capsule 1 crossing the capsule 1 first through the rear wall 6 and then through the front wall 5.

In other words, the air flow F is directed from a second axial opening 13, facing the rear wall 6 of the capsule 1 on the side opposite the first axial opening 12, to the first axial opening 12 crossing the capsule 1 first through the rear wall 6 and then through the front wall 5, removing the products 4 from the containment chamber 3, and dragging them outwards from the capsule 1.

Advantageously, therefore, by blowing air within the capsule 1 it is possible to empty it to collect and recover the exhausted powdered food products 4.

Preferably, the generating step is carried out so that the air flow F passes through one or more rear holes 6a in the direction of the front wall 5.

In particular, the generating step is carried out by generating an overpressure or a depressure at the front wall 5 such as to break the front wall 5 itself.

Preferably, the absolute value of the pressure generated at the front wall 5 is between 0.5 bar and 4 bar, even more preferably between 1.2 bar and 2.5 bar.

In particular, with reference to figure 5, the air flow F, blown within the containment chamber 3 through the rear holes 6a, produces a thrust on the front wall 5 (or on the compacted products 4) having an intensity such as to break the front wall 5. From the break of the front wall, two break portions 5' are thus generated, bent towards the outside of the capsule 1 by the air flow F, which allow a removal of the products 4 through the entire transverse section of the containment body 3.

Preferably, the air flow F has a flow value between 50 I/min and 300 l/min, even more preferably between 100 I/min and 180 I/min.

Preferably, as will be clearer in the description below, the generating step comprises at least two generating sub-steps in sequence such that the withdrawal of the exhausted powdered food products 4 can be carried out in two steps. Advantageously, in this manner the withdrawal of the products 4 can be carried out in two steps in order to ensure that the removal of the products 4 takes place in an optimal and complete manner. Preferably, the method according to the present invention further comprises at least one step of sequentially moving the housing 11 between consecutive operating stations S1, S2, S3 comprising:
- at least one loading station S1 in which the capsule 1 is arranged within the housing 11,
- at least one cleaning station S2 in which the exhausted powdered food products 4 contained within the capsule 1 are withdrawn from the capsule 1, and
- at least one unloading station S3 in which the capsule 1 is removed from the housing 11.

A unit 10 for recovering capsules 1 containing exhausted powdered food products 4, henceforth simply unit 10, is also part of the present invention.

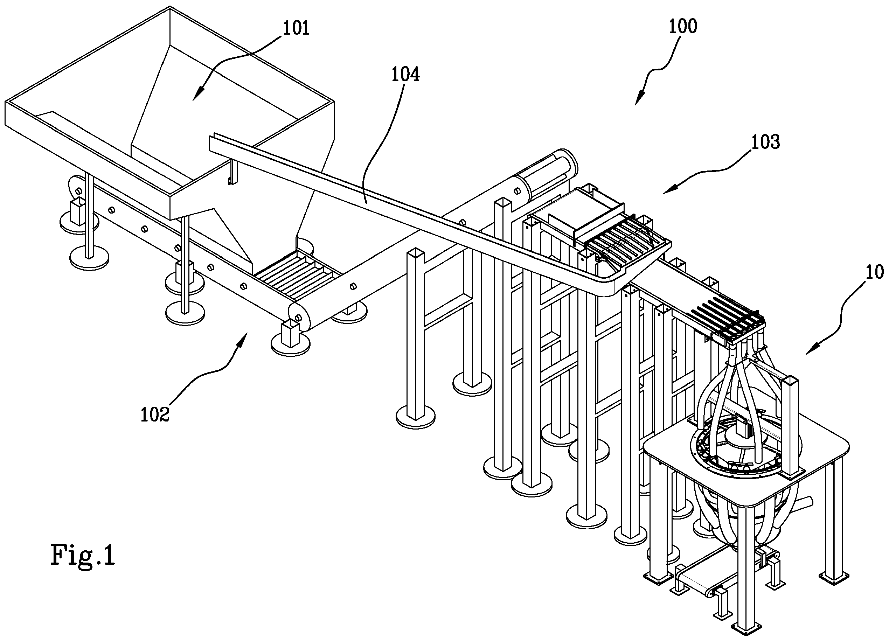

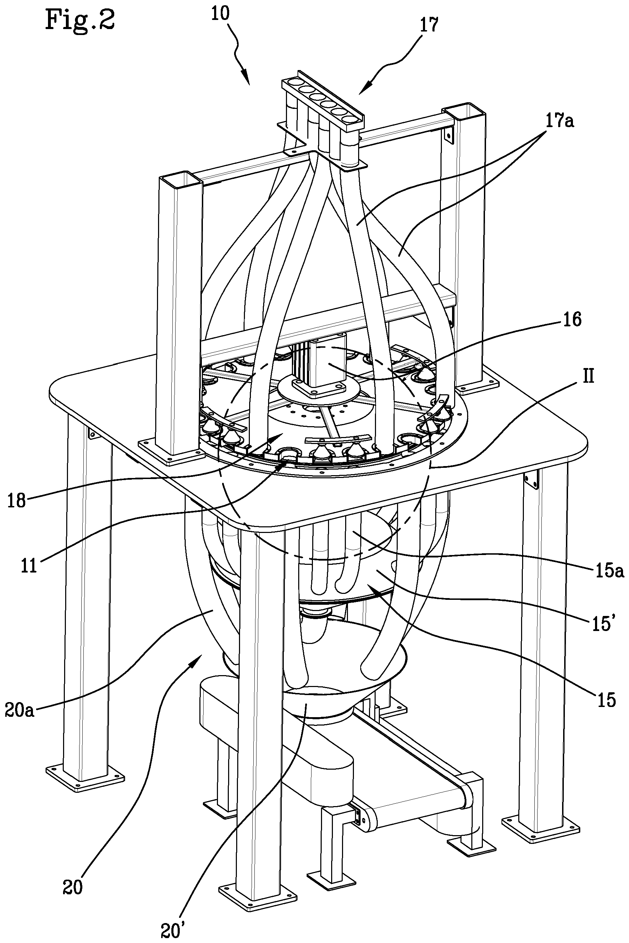

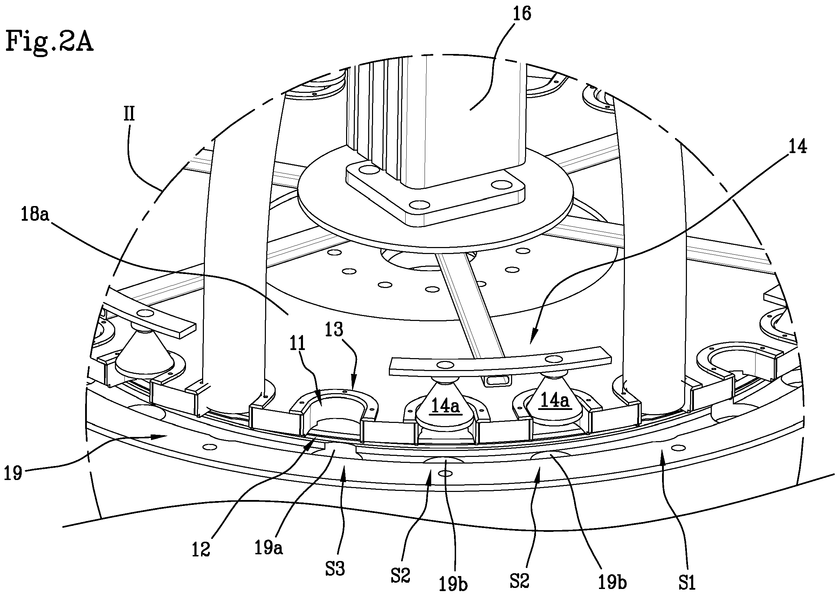

Figures 1, 2 and 2A refer to a possible embodiment of a machine 100 for recovering capsules 1 comprising a unit 10 according to the present invention.

The machine 100 is designed for industrial applications where there is a need to recover a large number of capsules, for example from collection points where consumers have delivered the capsules 1.

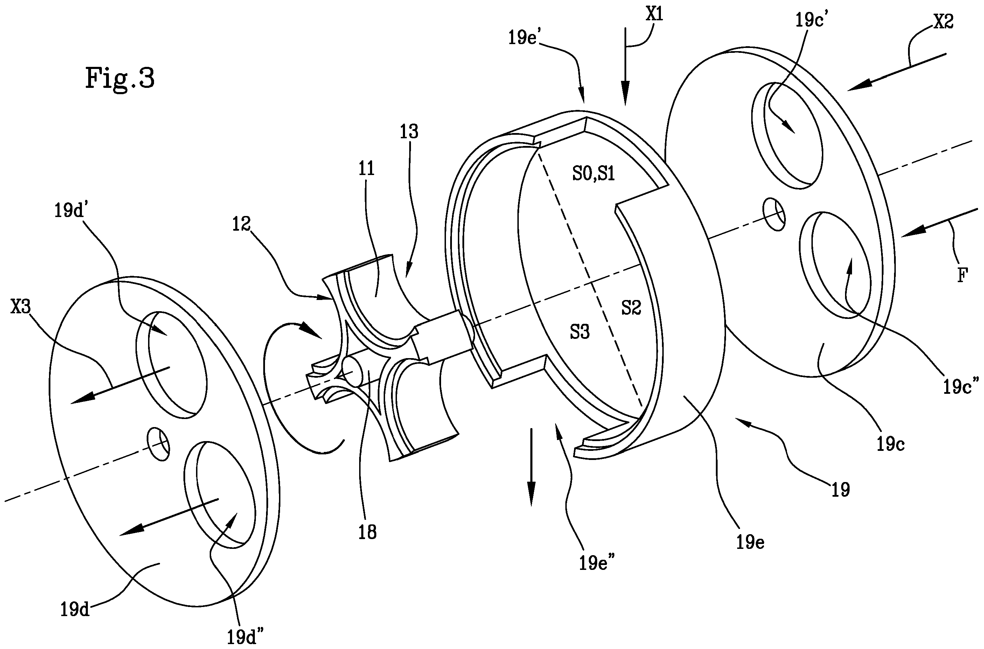

Figure 3 instead refers to a possible embodiment of a unit 10 for typically domestic applications (e.g., for coffee machines) or of public use (e.g., beverage dispensers or waste baskets), in which the hourly productivity, understood as the number of capsules 1 to be emptied in an hour, is much lower, and the number of capsules 1 to be disposed of is variable and not constant over time.

The unit 10 comprises:
- at least one housing 11 shaped to receive a capsule 1,
- at least one air flow generator 14, not shown in the embodiment of figure 3, configured to generate an air flow F passing through at least the first axial opening 12 (in accordance with what was previously described), such that, during an operating configuration in which the capsule 1 is arranged within the housing 11, the air flow F flows outwards from the containment chamber 3 through the front wall 5 of the capsule 1 so as to withdraw the exhausted powdered food products 4, and
- first collection means 15, not shown in the embodiment of figure 3, configured to collect the exhausted powdered food products 4 withdrawn from the capsules 1.

In particular, the air flow generator 14 is configured to generate an overpressure or a depressure at the front wall 5 such as to break said front wall 5.

Preferably each housing 11 has a second axial opening 13 and the air flow generator 14 is a compressed air blowing device suitable for generating an air flow F entering the second axial opening 13 and exiting from the first axial opening 12.

Furthermore, preferably the blowing device comprises at least one sealing bell 14a which can be reversibly coupled with the second axial opening 13 of the housing 11 to define a fluid-tight connection between a compressed air generating source 16 and the housing 11.

Preferably, the unit 1 comprises movement means 18, not illustrated in the embodiment of figure 3, configured to move the housing 11 between consecutive operating stations S1, S2, S3 comprising:
- at least one loading station S1 in which the housing 11 receives the capsule 1,
- at least one cleaning station S2, subsequent to the loading station S1, in which the air flow generator 14 is activated or activatable over the housing 11 to withdraw the exhausted powdered food products 4 contained within the capsule 1, and
- at least one unloading station S3, subsequent to the cleaning station S2, in which the capsule 1 is expelled from the housing 11.

In particular, the air flow generator 14 is configured to blow compressed air through the second axial opening 13 towards the first axial opening 12 of the housing 11 so as to blow the products 4 away from the containment chamber 3.

With reference to figure 1, preferably the machine 100 comprises a loading hopper 101 configured to receive a plurality of capsules 1 to be recovered. Preferably, the machine 100 then comprises a conveyor belt 102 configured to transport the capsules 1 from the hopper 101 to a selection station 103 in which the capsules 1 are selected to be sent to the unit 1 only if correctly oriented, that is, if the capsules 1 are resting on the front walls 5, otherwise they are returned to the hopper 101 by means of a return slide 104.

Preferably the unit 1 comprises feeding means 17, even more preferably one or more feeding pipes 17a, configured to receive the capsules 1 from the selection station 103 and transfer them to the loading stations S1 of the unit 1.

Preferably, the movement means 18 of the unit 1 illustrated in figures 1, 2 and 2A comprise a rotating carousel 18a, even more preferably a vertical-axis rotating carousel, comprising a plurality of housings 11 arranged circumferentially.

In particular, the carousel 18a is slidable within a supporting structure 19 defining the operating stations S1, S2, S3 so as to move the capsules 1 in sequence along a circular path.

Preferably in the illustrated embodiment, two cleaning stations S2 are provided in sequence and therefore two respective chambers 14a so that each housing 11 is fed first into one and then into the other. The two cleaning steps therefore guarantee an optimal removal of the products 4. Furthermore, preferably the first collection means 15 comprise a first collection container 15' and at least a first connecting duct 15a arranged between the cleaning stations S2 and the first collection container 15'.

In particular, each first connecting duct 15a is connected to a respective cavity 19a of the supporting structure 19 such that, when the housing 11 is moved at the respective unloading station S3, the respective first axial opening 12 is facing and opening into the cavity 19a, putting the housing 11 in communication with the first container 15'.

The presence of the first connecting ducts 15a makes it possible to prevent the recovered product 4 from dispersing into the environment and being correctly directed towards the first container 15'.

Furthermore, preferably the unit 10 comprises second collection means 20 configured to collect the capsules 1 from the housing 11 arranged in the unloading station S3; in particular, the second collection means 20 comprise a second collection container 20' and second connecting ducts 20a arranged between the unloading stations S3 and the second collection container 20'.

In particular, each second connecting duct 20a is connected to a respective cavity 19b of the supporting structure 19 such that, when the housing 11 is moved at the respective cleaning station S2, the respective first axial opening 12 is facing and opening into the cavity 19b, putting the housing 11 in communication with the second container 20'.

Operatively therefore, each capsule 1 received by the unit 10 of figure 2 is initially sent via a feed pipe 17a to a respective housing 11 within a loading station S1. The carousel 18a is then rotated so that the housing 11 passes from the loading station S1 to the first cleaning station S2 in which the products 4 are blown to be sent by means of a first connecting duct 15a to the first container 15'. Subsequently, the carousel 18a is rotated so that the housing 11 passes from the first cleaning station S2 to the second cleaning station S2 in which the products 4 are sucked again in order to ensure perfect removal.

Subsequently, the carousel 18a is rotated so that the housing 11 is arranged at the unloading station S3 in which the emptied capsule 1 is sent via the second connecting duct 20a, preferably falling by gravity, to the second container 20'.

With reference to figure 3, a unit 10 is instead illustrated which can for example be implemented in a beverage preparation machine, not illustrated.

The illustrated unit 10 comprises four housings 11 obtained on a rotating carousel 18a enclosed within a supporting structure 19 comprising a first disk 19c, a second disk 19d and a cylindrical side wall 19e.

Operationally, a non-exhausted capsule (not shown) can be fed in the direction illustrated by the arrow X1 within a through opening 19e' of the cylindrical side wall 19e in order to be arranged in a housing 11 at a dispensing station S0 in which, through beverage dispensing means, not shown, the dispensing of the beverage is obtained.

In particular, the dispensing means operate in the direction indicated by the arrow X2 through a through opening 19c' of the first disk 19 whereby water is made to flow into the capsule to mix with the food products contained in the capsule to obtain a beverage which outflows from the opposite side through a respective through opening 19d' of the second disk 19, in the direction indicated by the arrow X3.

The dispensing station S0 in this case also corresponds to the loading station of the unit 10 whereby the inserted capsule, after dispensing the beverage, defines a capsule 1 to be recovered already arranged in a housing 11.

At this point the carousel 18a is rotated to move the housing 11 at the cleaning station S2, in which the exhausted products 4 are blown from the containment chamber with an air flow passing through a respective through opening 19c" of the first disk 19c, to be expelled from the containment chamber 3 through a respective through opening 19d" of the second disk 19d arranged in axis with the opening 19c".

At this point the carousel 18a can be rotated again to arrange the housing in the unloading station S3 in which the capsule 1 can be ejected, falling by gravity, from a respective opening 19e".

Thanks to the unit 10 thus described, it is therefore advantageously possible to recover, directly after dispensing the beverage, the capsule just used, recovering on the one hand (through the opening 19d") the products 4 and on the other (through the opening 19e") the containment body 3 of the capsule 1.

The present invention achieves the proposed objects, overcoming the complained drawbacks of the prior art and providing the user with an efficient and practical exhausted capsule recovery method and a related unit 10, capable of implementing said method, with reduced and versatile dimensions in use for various applications.

## Claims

1. Method for recovering capsules (1) containing exhausted powdered food products, comprising the steps of:
- providing at least one capsule (1) having a containment body (2) defining a containment chamber (3) of exhausted powdered food products (4) axially delimited by a front wall (5) and a rear wall (6);
- arranging said capsule (1) within a housing (11) having at least a first axial opening (12) facing said front wall (5);
- generating an air flow (F) passing through said at least one first axial opening (12) of the housing (11) and through said front wall (5) of the capsule (1) so as to withdraw the exhausted powdered food products (4) contained within the capsule (1);
- collecting the withdrawn exhausted powdered food products (4), and
- removing the emptied capsule (1) from the housing (11);
**characterized in that** said air flow (F) generating step is carried out by generating an overpressure or a depressure at the front wall (5) such as to break said front wall (5).

2. Method according to claim 1, wherein said generating step is carried out by generating a blown air flow (F) directed towards said front wall (5) of the capsule (1) crossing the capsule (1) first through said rear wall (6) and then through the front wall 5.

3. Method according to claim 2, wherein said rear wall (6) of the capsule (1) has one or more rear holes (6a); said generating step being carried out so that said air flow (F) passes through said rear holes (6a) towards the front wall (5).

4. Method according to one or more of the preceding claims, wherein said generating step comprises at least two generating sub-steps in sequence such that the withdrawal of the exhausted powdered food products (4) can be carried out in two steps.

5. Method according to one or more of the preceding claims, comprising at least one step of sequentially moving said housing (11) between consecutive operating stations (S0, S1, S2, S3) comprising:
- at least one loading station (S1) wherein said capsule (1) is arranged within said housing (11),
- at least one cleaning station (S2) wherein said exhausted powdered food products (4) contained within the capsule (1) are withdrawn from the capsule (1), and
- at least one unloading station (S3) wherein said capsule (1) is removed from the housing (11).

6. Unit (10) for recovering capsules containing exhausted powdered food products, comprising:
- at least one housing (11) shaped to receive a capsule (1) containing exhausted powdered food products (4), said capsule (1) having a containment body (2) defining a containment chamber (3) of said exhausted powdered food products (4) axially delimited by a front wall (5) and a rear wall (6), said housing (11) having a first axial opening (12) suitable for facing said front wall (5) of the capsule (1),
- at least one air flow generator (14) configured to generate an air flow (F) passing through at least said first axial opening (12) of said at least one housing (11), such that, during an operating configuration wherein said capsule (1) is arranged within said housing (11), said air flow (F) flows outwards from the containment chamber (3) through the front wall (5) of said capsule (1) so as to withdraw the exhausted powdered food products (4) contained within the capsule (1), wherein said air flow generator (14) is configured to generate an overpressure or a depressure at the front wall (5) such as to break said front wall (5),
- first collection means (15) configured to collect the exhausted powdered food products (4) withdrawn from said capsules (1).

7. Unit (10) according to claim 6, wherein said at least one housing (11) has a second axial opening (13) arranged opposite said first axial opening (12) and wherein said air flow generator (14) is a compressed air blowing device configured to generate an air flow (F) entering said second axial opening (13) and exiting from said first axial opening (12).

8. Unit (10) according to claim 7, wherein said blowing device comprises at least one sealing bell (14a) which can be reversibly coupled with said second axial opening (13) of said housing (11) to define a fluid-tight connection between a compressed air generating source (16) and said housing (11).

9. Unit (11) according to one or more of claims 6-8, comprising movement means (19) configured to move said at least one housing (11) between consecutive operating stations (S0, S1, S2, S3) comprising:
- at least one loading station (S1) wherein said housing (11) receives said capsule (1),
- at least one cleaning station (S2), subsequent to said loading station (S1), wherein said at least one air flow generator (14) is activated or activatable over said housing (11) to withdraw said exhausted powdered food products (4) contained within the capsule (1), and
- at least one unloading station (S3), subsequent to said cleaning station (S2), wherein said capsule (1) is expelled from said housing (11).

10. Unit (10) according to claim 9, wherein said movement means (18) comprise a rotating carousel (18a) comprising a plurality of housings (11) arranged circumferentially, said carousel (18a) being slidable within a supporting structure (19) defining said operating stations (S0, S1, S2, S3).

11. Unit (10) according to claim 9 or 10, wherein said first collection means (15) comprise a first collection container (15') and at least a first connecting duct (15a) arranged between said at least one cleaning station (S2) and said first collection container (15').

12. Unit (10) according to one or more of claims 9-11, comprising second collection means (20) configured to collect the capsules (1) from the housing (11) arranged in the unloading station (S3); said second collection means (20) preferably comprising a second collection container (20') and at least a second connecting duct (20a) arranged between at least one unloading station (S3) and said second collection container (20').

## Patentansprüche

1. Verfahren zur Rückgewinnung von Kapseln (1) mit verbrauchten pulverförmigen Nahrungsmitteln, umfassend die folgenden Schritte:
- Bereitstellen von mindestens einer Kapsel (1), aufweisend einen Fassungskörper (2), definierend eine Fassungskammer (3) für verbrauchte pulverförmige Nahrungsmittel (4), die axial durch eine Frontwand (5) und eine Rückwand (6) begrenzt ist;
- Anordnen der Kapsel (1) in einer Aufnahme (11), aufweisend mindestens eine erste axiale Öffnung (12), die der Frontwand (5) zugewandt ist;
- Erzeugen eines Luftstroms (F), der durch die mindestens eine erste axiale Öffnung (12) der Aufnahme (11) und durch die Frontwand (5) der Kapsel (1) strömt, sodass die verbrauchten pulverförmigen Nahrungsmittel (4), die in der Kapsel (1) enthalten sind, entnommen werden;
- Sammeln der entnommenen verbrauchten pulverförmigen Nahrungsmittel (4), und
- Entfernen der geleerten Kapsel (1) aus der Aufnahme (11),
**dadurch gekennzeichnet, dass** der Schritt zum Erzeugen des Luftstroms (F) durchgeführt wird, indem ein Überdruck oder ein Unterdruck an der Frontwand (5) erzeugt wird, sodass die Frontwand (5) durchbrochen wird.

2. Verfahren nach Anspruch 1, wobei der Schritt zum Erzeugen durchgeführt wird, indem ein geblasener Luftstrom (F) erzeugt wird, der hinführend zur Frontwand (5) der Kapsel (1) gerichtet ist und die Kapsel (1) zuerst durch die Rückwand (6) und dann durch die Frontwand (5) kreuzt.

3. Verfahren nach Anspruch 2, wobei die Rückwand (6) der Kapsel (1) ein oder mehrere rückseitige Löcher (6a) aufweist, wobei der Schritt zum Erzeugen so durchgeführt wird, dass der Luftstrom (F) durch die rückseitigen Löcher (6a) hinführend zur Frontwand (5) strömt.

4. Verfahren nach einem oder mehreren der vorhergehenden Ansprüche, wobei der Schritt zum Erzeugen mindestens zwei Unterschritte zum Erzeugen nacheinander umfasst, sodass das Entnehmen der verbrauchten pulverförmigen Nahrungsmittel (4) in zwei Schritten durchgeführt werden kann.

5. Verfahren nach einem oder mehreren der vorhergehenden Ansprüche, umfassend mindestens einen Schritt, um die Aufnahme (11) sequenziell zwischen aufeinanderfolgenden Bearbeitungsstationen (S0, S1, S2, S3) zu bewegen, umfassend:
- mindestens eine Ladestation (S1), in der die Kapsel (1) in der Aufnahme (11) angeordnet wird;
- mindestens eine Reinigungsstation (S2), in der die verbrauchten pulverförmigen Nahrungsmittel (4), die in der Kapsel (1) enthalten sind, aus der Kapsel (1) entnommen werden, und
- mindestens eine Entladestation (S3), in der die Kapsel (1) aus der Aufnahme (11) entfernt wird.

6. Einheit (10) zur Rückgewinnung von Kapseln mit verbrauchten pulverförmigen Nahrungsmitteln, umfassend:
- mindestens eine Aufnahme (11), die ausgeformt ist, um eine Kapsel (1) mit verbrauchten pulverförmigen Nahrungsmitteln (4) aufzunehmen, wobei die Kapsel (1) einen Fassungskörper (2) aufweist, der eine Fassungskammer (3) für die verbrauchten pulverförmigen Nahrungsmittel (4) definiert, die axial durch eine Frontwand (5) und eine Rückwand (6) begrenzt ist, wobei die Aufnahme (11) eine erste axiale Öffnung (12) aufweist, die dazu geeignet ist, der Frontwand (5) der Kapsel (1) zugewandt zu sein;
- mindestens einen Luftstromgenerator (14), der ausgelegt ist, um einen Luftstrom (F) zu erzeugen, der durch die mindestens eine erste axiale Öffnung (12) der mindestens einen Aufnahme (11) strömt, sodass der Luftstrom (F) während einer Betriebsauslegung, in der die Kapsel (1) in der Aufnahme (11) angeordnet ist, aus der Fassungskammer (3) durch die Frontwand (5) der Kapsel (1) nach außen strömt, sodass die verbrauchten pulverförmigen Nahrungsmittel (4), die in der Kapsel (1) enthalten sind, entnommen werden, wobei der Luftstromgenerator (14) ausgelegt ist, um einen Überdruck oder einen Unterdruck an der Frontwand (5) zu erzeugen, sodass die Frontwand (5) durchbrochen wird;
- erste Sammelmittel (15), die ausgelegt sind, um die verbrauchten pulverförmigen Nahrungsmittel (4), die aus den Kapseln (1) entnommen wurden, zu sammeln.

7. Einheit (10) nach Anspruch 6, wobei die mindestens eine Aufnahme (11) eine zweite axiale Öffnung (13) aufweist, die gegenständig zur ersten axialen Öffnung (12) angeordnet ist, und wobei der Luftstromgenerator (14) eine Druckluftblasvorrichtung ist, die ausgelegt ist, um einen Luftstrom (F) zu erzeugen, der in die zweite axiale Öffnung (13) einströmt und aus der ersten axialen Öffnung (12) ausströmt.

8. Einheit (10) nach Anspruch 7, wobei die Blasvorrichtung mindestens eine Dichtglocke (14a) umfasst, die reversierbar mit der zweiten axialen Öffnung (13) der Aufnahme (11) gekoppelt werden kann, um eine fluiddichte Verbindung zwischen einer Drucklufterzeugungsquelle (16) und der Aufnahme (11) zu definieren.

9. Einheit (11) nach einem oder mehreren der Ansprüche 6-8, umfassend Bewegungsmittel (19), die ausgelegt sind, um die mindestens eine Aufnahme (11) zwischen aufeinanderfolgenden Bearbeitungsstationen (S0, S1, S2, S3) zu bewegen, umfassend:
- mindestens eine Ladestation (S1), in der die Aufnahme (11) die Kapsel (1) aufnimmt;
- mindestens eine Reinigungsstation (S2), die auf die Ladestation (S1) folgt, in der mindestens ein Luftstromgenerator (14) über der Aufnahme (11) aktiviert oder aktivierbar ist, um die verbrauchten pulverförmigen Nahrungsmittel (4), die in der Kapsel (1) enthalten sind, zu entnehmen, und
- mindestens eine Entladestation (S3), die auf die Reinigungsstation (S2) folgt, in der die Kapsel (1) aus der Aufnahme (11) ausgeworfen wird.

10. Einheit (10) nach Anspruch 9, wobei die Bewegungsmittel (18) ein rotierendes Karussell (18a) umfassen, das eine Vielzahl von Aufnahmen (11) umfasst, die umfangseitig angeordnet sind, wobei das Karussell (18a) innerhalb einer Tragestruktur (19), die die Bearbeitungsstationen (S0, S1, S2, S3) definiert, verschiebbar ist.

11. Einheit (10) nach Anspruch 9 oder 10, wobei die ersten Sammelmittel (15) einen ersten Sammelbehälter (15') und mindestens eine erste Sammelleitung (15a), die zwischen der mindestens einen Reinigungsstation (S2) und dem ersten Sammelbehälter (15') angeordnet ist, umfassen.

12. Einheit (10) nach einem oder mehreren der Ansprüche 9-11, umfassend zweite Sammelmittel (20), die ausgelegt sind, um die Kapseln (1) von der in der Entladestation (S3) angeordneten Aufnahme (11) zu sammeln, wobei die zweiten Sammelmittel (20) vorzugsweise einen zweiten Sammelbehälter (20') und mindestens eine zweite Sammelleitung (20a), die zwischen mindestens einer Entladestation (S3) und dem zweiten Sammelbehälter (20') angeordnet ist, umfasst.

## Revendications

1. Procédé de récupération de capsules (1) contenant des produits alimentaires en poudre épuisés, comprenant les étapes suivantes :
- fournir au moins une capsule (1) ayant un corps de confinement (2) définissant une chambre de confinement (3) de produits alimentaires en poudre épuisés (4) délimitée axialement par une paroi avant (5) et une paroi arrière (6) ;
- agencer ladite capsule (1) à l'intérieur d'un logement (11) ayant au moins une première ouverture axiale (12) faisant face à ladite paroi frontale (5) ;
- générer un flux d'air (F) passant à travers ladite au moins une première ouverture axiale (12) du logement (11) et à travers ladite paroi avant (5) de la capsule (1) de manière à retirer les produits alimentaires en poudre épuisés (4) contenus dans la capsule (1) ;
- collecter les produits alimentaires en poudre épuisés retirés (4), et
- enlever la capsule vidée (1) du logement (11) ;
**caractérisé en ce que** ladite étape consistant à générer un flux d'air (F) est réalisée en générant une surpression ou une dépression au niveau de la paroi avant (5) de manière à casser ladite paroi avant (5).

2. Procédé selon la revendication 1, dans lequel ladite étape consistant à générer est réalisée en générant un flux d'air soufflé (F) dirigé vers ladite paroi avant (5) de la capsule (1) traversant la capsule (1) d'abord à travers ladite paroi arrière (6), puis à travers la paroi avant (5).

3. Procédé selon la revendication 2, dans lequel ladite paroi arrière (6) de la capsule (1) comporte un ou plusieurs trous arrière (6a) ; ladite étape consistant à générer étant réalisée de sorte que ledit flux d'air (F) passe à travers lesdits trous arrière (6a) vers la paroi avant (5).

4. Procédé selon une ou plusieurs des revendications précédentes, dans lequel ladite étape consistant à générer comprend au moins deux sous-étapes consistant à générer en séquence de sorte que le retrait des produits alimentaires en poudre épuisés (4) peut être effectué en deux étapes.

5. Procédé selon une ou plusieurs des revendications précédentes, comprenant au moins une étape consistant à déplacer séquentiellement le logement (11) entre des postes de fonctionnement consécutives (S0, S1, S2, S3) comprenant :
- au moins un poste de chargement (S1) dans lequel ladite capsule (1) est agencée à l'intérieur dudit logement (11),
- au moins un poste de nettoyage (S2) dans lequel lesdits produits alimentaires en poudre épuisés (4) contenus dans la capsule (1) sont retirés de la capsule (1), et
- au moins un poste de déchargement (S3) dans lequel ladite capsule (1) est enlevée du logement (11).

6. Unité (10) pour récupérer des capsules contenant des produits alimentaires en poudre épuisés, comprenant :
- au moins un logement (11) façonné pour recevoir une capsule (1) contenant des produits alimentaires en poudre épuisés (4), ladite capsule (1) ayant un corps de confinement (2) définissant une chambre de confinement (3) desdits produits alimentaires en poudre épuisés (4) délimitée axialement par une paroi avant (5) et une paroi arrière (6), ledit logement (11) ayant une première ouverture axiale (12) adaptée pour faire face à ladite paroi avant (5) de la capsule (1),
- au moins un générateur de flux d'air (14) configuré pour générer un flux d'air (F) passant à travers au moins ladite première ouverture axiale (12) dudit au moins un logement (11), de sorte que, pendant une configuration de fonctionnement dans laquelle ladite capsule (1) est agencée à l'intérieur dudit logement (11), ledit flux d'air (F) s'écoule vers l'extérieur de la chambre de confinement (3) à travers la paroi avant (5) de ladite capsule (1) de manière à retirer les produits alimentaires en poudre épuisés (4) contenus dans la capsule (1), dans lequel ledit générateur de flux d'air (14) est configuré pour générer une surpression ou une dépression au niveau de la paroi avant (5) de manière à casser ladite paroi avant (5),
- des premiers moyens de collecte (15) configurés pour collecter les produits alimentaires en poudre épuisés (4) retirés desdites capsules (1).

7. Unité (10) selon la revendication 6, dans laquelle ledit au moins un logement (11) a une seconde ouverture axiale (13) agencée à l'opposé de ladite première ouverture axiale (12) et dans laquelle ledit générateur de flux d'air (14) est un dispositif de soufflage d'air comprimé configuré pour générer un flux d'air (F) entrant dans ladite seconde ouverture axiale (13) et sortant de ladite première ouverture axiale (12).

8. Unité (10) selon la revendication 7, dans laquelle ledit dispositif de soufflage comprend au moins une cloche d'étanchéité (14a) qui peut être accouplée de manière réversible à ladite seconde ouverture axiale (13) dudit logement (11) pour définir une liaison étanche aux liquides entre une source de génération d'air comprimé (16) et ledit logement (11).

9. Unité (11) selon une ou plusieurs des revendications 6-8, comprenant des moyens de déplacement (19) configurés pour déplacer ledit au moins un logement (11) entre des postes de fonctionnement consécutifs (S0, S1, S2, S3) comprenant :
- au moins un poste de chargement (S1) dans lequel ledit logement (11) reçoit ladite capsule (1),
- au moins un poste de nettoyage (S2), après ledit poste de chargement (S1), dans lequel ledit au moins un générateur de flux d'air (14) est activé ou activable sur ledit logement (11) pour retirer lesdits produits alimentaires en poudre épuisés (4) contenus dans la capsule (1), et
- au moins un poste de déchargement (S3), après ledit poste de nettoyage (S2), dans laquelle ladite capsule (1) est expulsée dudit logement (11).

10. Unité (10) selon la revendication 9, dans laquelle lesdits moyens de déplacement (18) comprennent un carrousel rotatif (18a) comprenant une pluralité de logements (11) agencés circonférentiellement, ledit carrousel (18a) étant coulissant à l'intérieur d'une structure de support (19) définissant lesdits postes de fonctionnement (S0, S1, S2, S3).

11. Unité (10) selon la revendication 9 ou 10, dans laquelle lesdits premiers moyens de collecte (15) comprennent un premier récipient de collecte (15') et au moins un premier conduit de liaison (15a) agencé entre ledit au moins un poste de nettoyage (S2) et ledit premier récipient de collecte (15').

12. Unité (10) selon une ou plusieurs des revendications 9-11, comprenant des seconds moyens de collecte (20) configuré pour collecter les capsules (1) à partir du logement (11) agencé dans le poste de déchargement (S3) ; lesdits seconds moyens de collecte (20) comprenant de préférence un second récipient de collecte (20') et au moins un second conduit de liaison (20a) agencé entre au moins un poste de déchargement (S3) et ledit second récipient de collecte (20').
